(19) Europäisches Patentamt
European Patent Office
Office européen des brevets

(11) Publication number: **0 323 729 B1**

(12) # EUROPEAN PATENT SPECIFICATION

(45) Date of publication of patent specification: **29.09.93**

(51) Int. Cl.⁵: **C09B 23/10**, G03C 1/825

(21) Application number: **88312055.2**

(22) Date of filing: **20.12.88**

The file contains technical information submitted after the application was filed and not included in this specification

(54) **Solid particle dispersions of dyes useful in photographic elements.**

(30) Priority: **23.12.87 US 137402**

(43) Date of publication of application: **12.07.89 Bulletin 89/28**

(45) Publication of the grant of the patent: **29.09.93 Bulletin 93/39**

(84) Designated Contracting States: **AT BE CH DE ES FR GB IT LI NL SE**

(56) References cited:
**EP-A- 0 019 299**
**US-A- 2 527 583**

(73) Proprietor: **EASTMAN KODAK COMPANY (a New Jersey corporation)**
**343 State Street**
**Rochester New York 14650(US)**

(72) Inventor: **Factor, Ronda Ellen c/o Eastman Kodak Company**
**Patent Department 343 State Street**
**Rochester New York 14650(US)**
Inventor: **Diehl, Donald Richard c/o Eastman Kodak Company**
**Patent Department 343 State Street**
**Rochester New York 14650(US)**

(74) Representative: **Baron, Paul Alexander Clifford et al**
**Kodak Limited Patent Department Headstone Drive**
**Harrow Middlesex HA1 4TY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 323 729 B1

## Description

This invention relates to dyes, particularly dyes useful as filter dyes, especially in photographic elements.

Photographic materials often contain filter dyes to absorb light from different regions of the spectrum, such as red, blue, green, ultraviolet, and infrared, to name a few. These filter dyes are often required to perform the function of absorbing light during exposure of the material so as to prevent or at least inhibit light of a region of the spectrum from reaching at least one of the radiation-sensitive layers of the element.

After processing of the element, however, the continued presence of the filter dye will adversely affect the image quality of the photo- graphic material. It is therefore desirable to use filter dyes that will be solubilized and removed or at least decolorized during photographic processing. Dyes that are easily solubilized, however, tend to wander throughout the photographic material during coating, adversely affecting the final image quality.

To prevent dye wandering, the dyes are often coated with a mordant to bind the dye in the layer in which it is coated. For example, carboxyphenyl-substituted pyrazolone merocyanine filter dyes are disclosed in US Patent 2,527,583. This patent teaches, however, to incorporate the dyes in a photographic element by dissolving them in water in their salt form and adding a mordant to the coating solution to prevent dye wandering. Dye mordants, while often useful, tend to either bind the dye too strongly, inhibiting solubilization of the dye during photographic processing, or too weakly, thus not preventing dye wandering. Another way to prevent dye wandering is to choose a dye that is insoluble at coating pH's and soluble and decolorizable at processing pH's. Such dyes have been incorporated in the hydrophilic layers of photographic elements dispersed with the aid of high-boiling organic solvents or precipitated in gelatin (usually with a pH shift from basic to acidic) under controlled conditions. Both these techniques can lead to large particle sizes and poor performance and light absorption characteristics.

EP-A-0019299 discloses solid particle dye dispersions of pyrazolone merocyanine dyes having carboxy groups at the 3-position of the pyrazolone ring and unsubstituted phenyl rings at the 5-position of the pyrazolone ring (e.g. Dye 101 therein) Such dyes, however, have been found to exhibit a significant amount of dye wandering when dispersed in a hydrophilic colloid layer.

It would therefore be highly desirable to provide a filter dye for use in photographic elements that effectively absorbs light, does not wander during coating, is fully solubilized during processing, and does not require a mordant.

According to the invention, there is provided a solid particle dispersion of a dye of the formula:

(I) 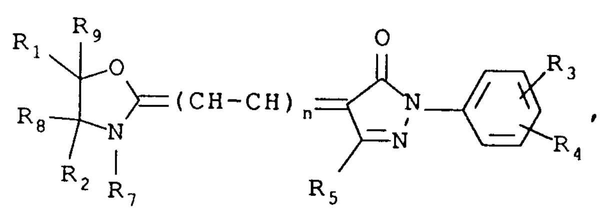

wherein

$R_1$ and $R_2$ are each independently substituted or unsubstituted alkyl or aryl, or together represent the atoms necessary to complete a substituted or unsubstituted 5- or 6-membered ring,

$R_3$ and $R_4$ each independently represents H, substituted or unsubstituted alkyl, substituted or unsubstituted aryl, $CO_2H$, or $NHSO_2R_6$,

$R_5$ is H, substituted or unsubstituted alkyl, substituted or unsubstituted aryl, substituted or unsubstituted carboxylate, substituted or unsubstituted amido, or substituted or unsubstituted acyl,

$R_6$ and $R_7$ are each independently substituted or unsubstituted alkyl or substituted or unsubstituted aryl,

$R_8$ is substituted or unsubstituted alkyl, or together with $R_9$ forms a double bond,

$R_9$ is H or together with $R_8$ forms a double bond, and

n is 1 or 2,

with the proviso that at least one of the aryl rings of the dye molecule has at least one substituent that is $CO_2H$ or $NHSO_2R_6$. have at least one substituent that is $CO_2H$ or $NHSO_2R_6$.

Carboxy-substituted merocyanine bleachable filter dyes are disclosed in U.S. Patent 2,527,583 (Dyes 6 and 7), but the dye is not in the form of a solid particle dispersion and, as is apparent from a close reading of the patent, when the dye is actually used in a photographic element, it is in its soluble salt form having a

$CO_2$ salt substituent rather than the $CO_2H$ substituent of formula (I).

The dyes of formula (I) are useful as general purpose filter dyes, alone or in combination with other filter dyes in photographic elements. They are insoluble at coating pH's of below 6 (generally 4 to 6) and very soluble at processing pH's of above 8 (generally 8 to 12), so that they do not interact with other components of the photographic element, yet still are fully solubilized during photographic processing.

According to formula (I), $R_1$, $R_2$, $R_3$, $R_4$, $R_5$, $R_6$, and $R_7$ may each be substituted or unsubstituted alkyl or substituted or unsubstituted aryl, preferably substituted or unsubstituted alkyl of 1 to 6 carbon atoms or substituted or unsubstituted aryl of 6 to 12 carbon atoms. $R_8$ may be substituted or unsubstituted alkyl of from 1 to 6 carbon atoms. Additionally, $R_5$ may be substituted or unsubstituted acyl, amido or carboxylate of from 1 to 6 carbon atoms. These groups may be substituted with any of a number of substituents as is known in the art, other than those, such as sulfo substituents, that would tend to increase the solubility of the dye so much as to cause it to become soluble at coating pH's. Examples of useful substituents include halogen, alkoxy, ester, amide, acyl, alkenyl, and alkylamino. Examples of alkyl groups include methyl, ethyl, n-propyl, isopropyl, n-butyl, isobutyl, n-pentyl, t-butyl, isopentyl, and n-hexyl. Examples of aryl groups include phenyl, naphthyl, etc.

$R_1$ and $R_2$ may also together represent the atoms necessary to complete a substituted or unsubstituted 5- or 6-membered ring, such as phenyl, naphthyl, cyclohexyl, and pyridyl. This ring may be substituted with substituents, other than those, such as sulfo substituents, that would tend to increase the solubility of the dye so much as to cause it to become soluble at coating pH's. Examples of useful substituents include halogen, alkyl, alkoxy, ester, amido, acyl, and alkylamino.

Examples of dyes according to formula (I) include the following:

1 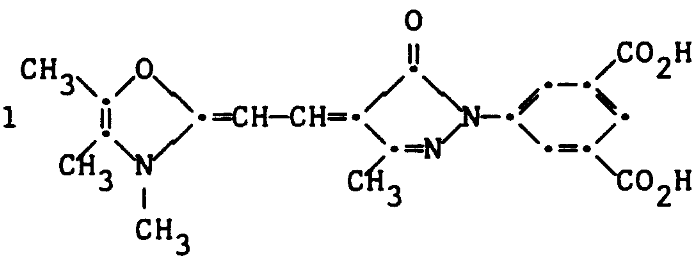

2 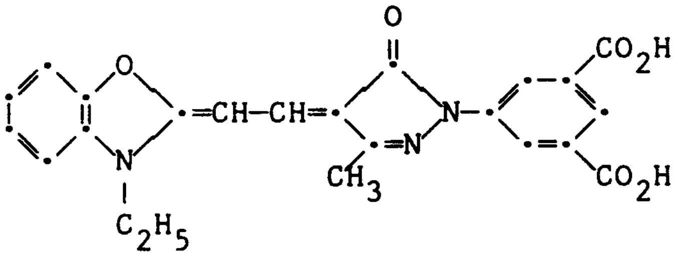

3 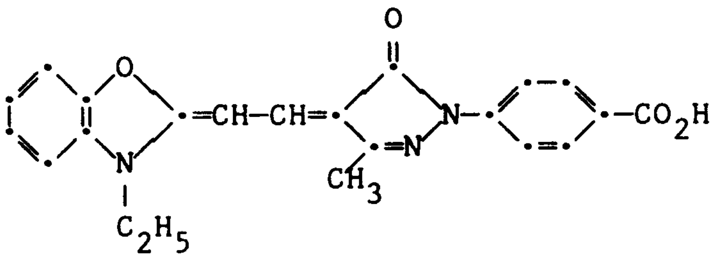

4 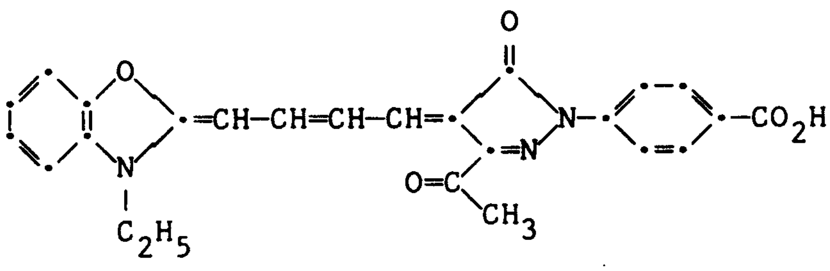

5 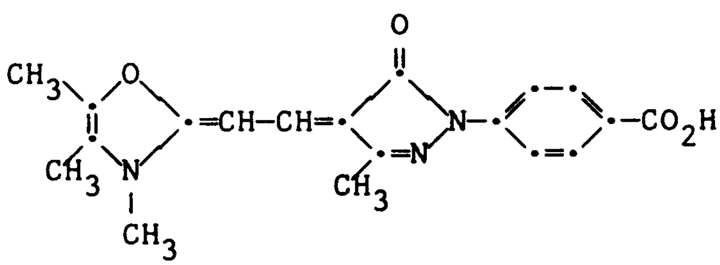

6 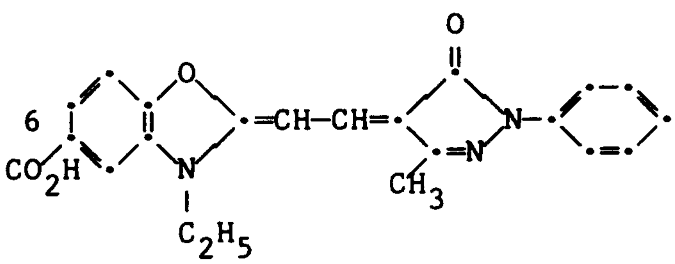

7

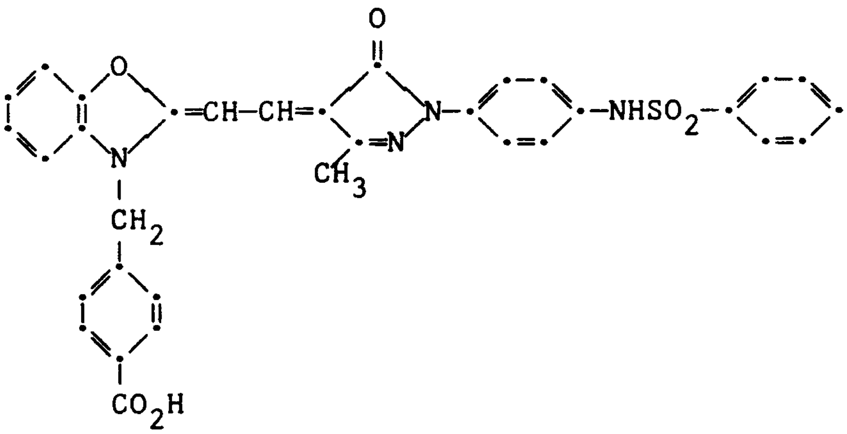

8

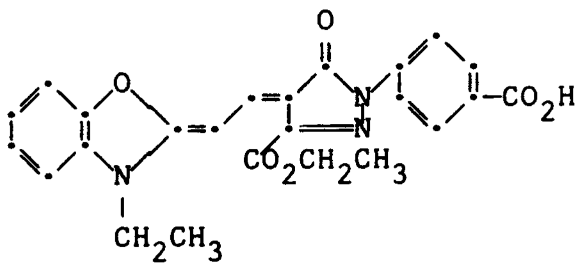

9

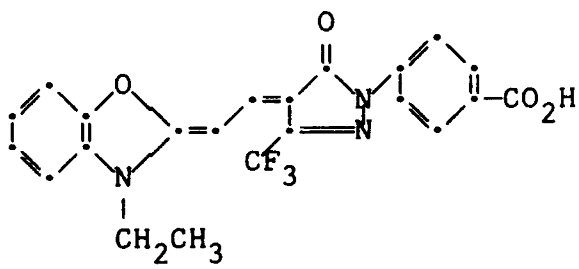

10

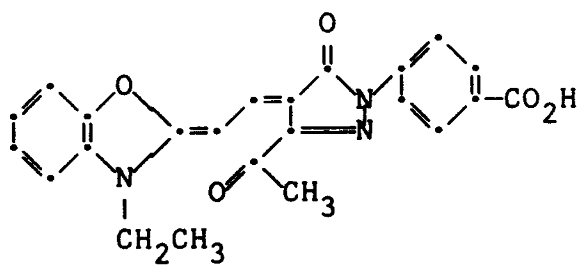

11

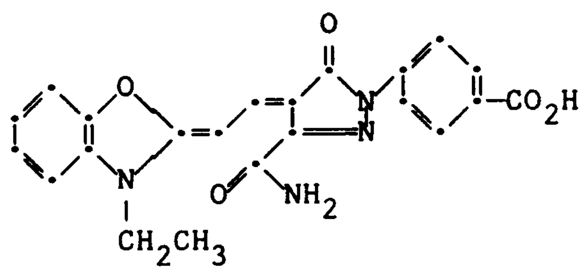

12

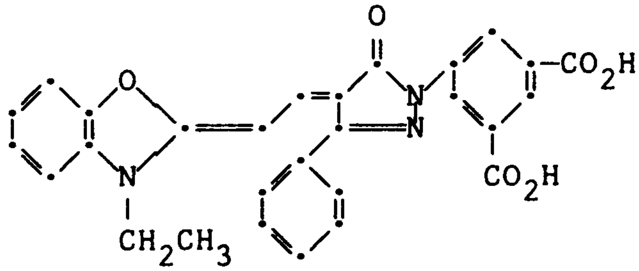

13

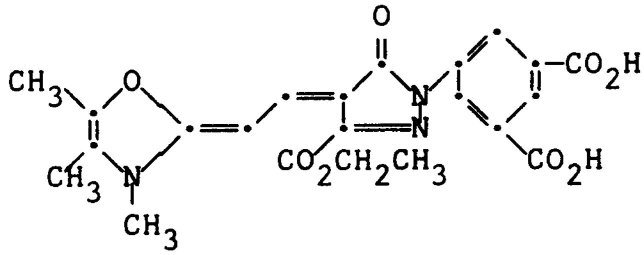

14

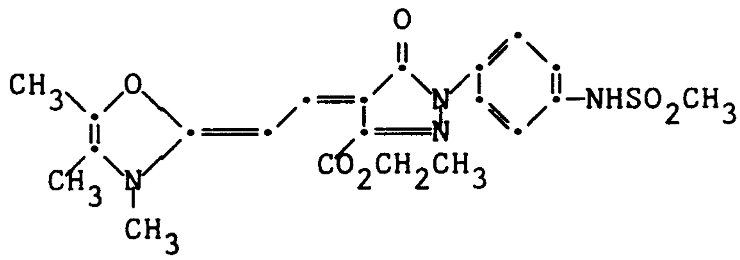

15

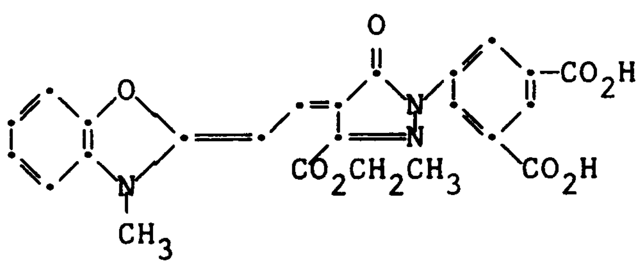

16

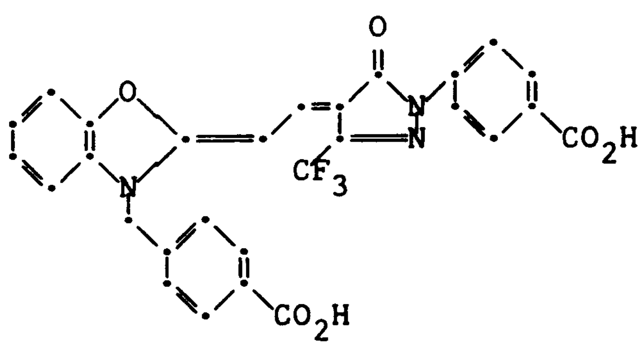

17

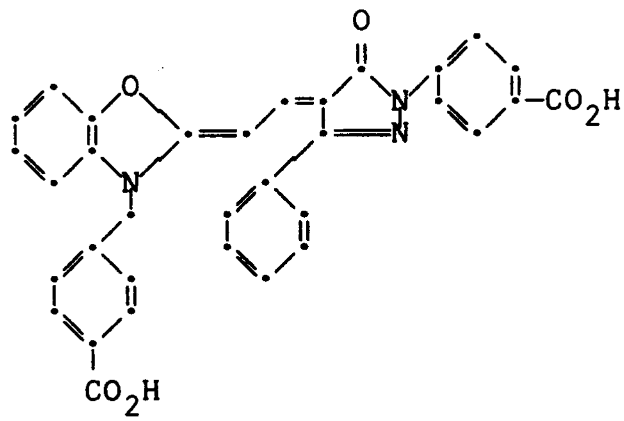

18

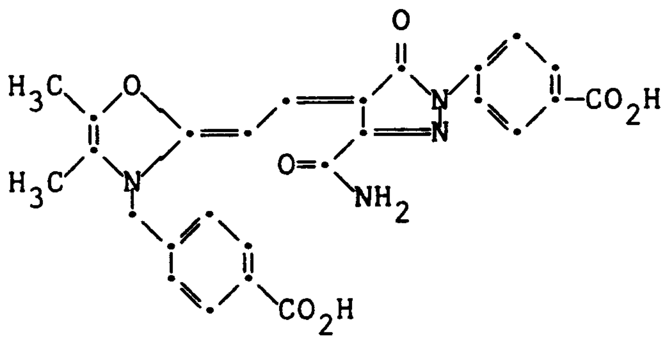

19

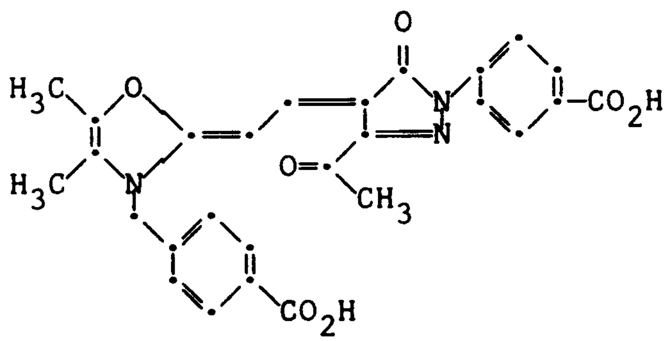

20

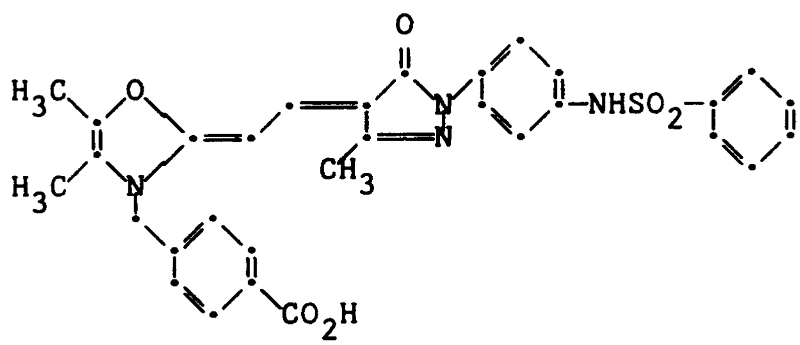

21

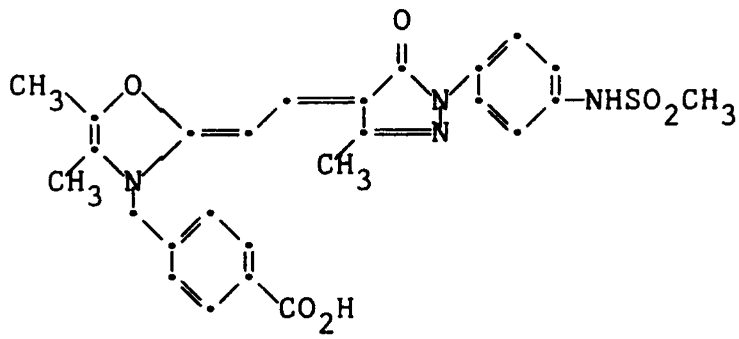

22

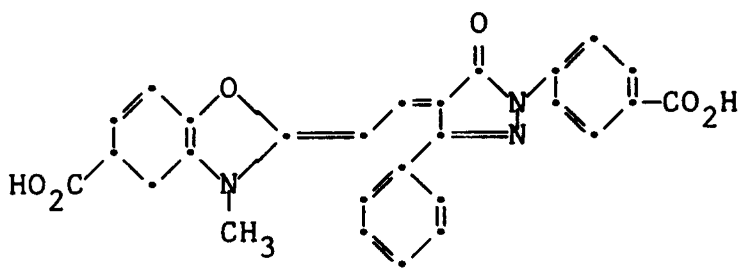

23

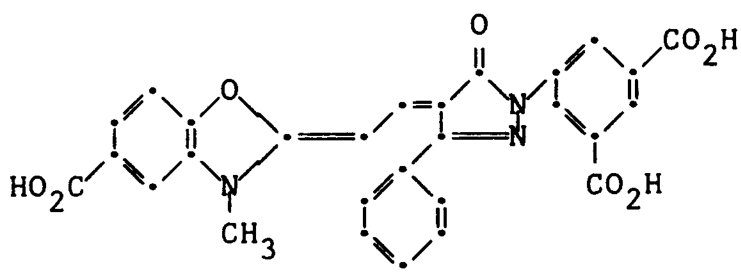

24

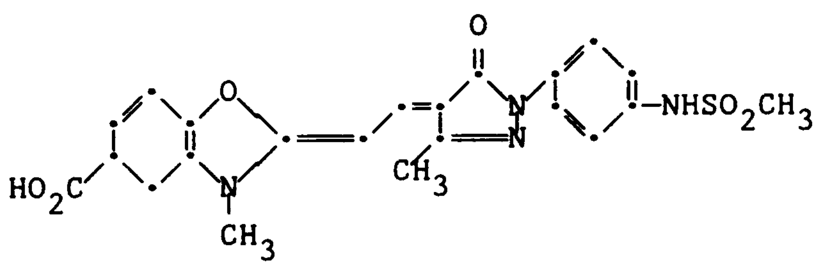

25

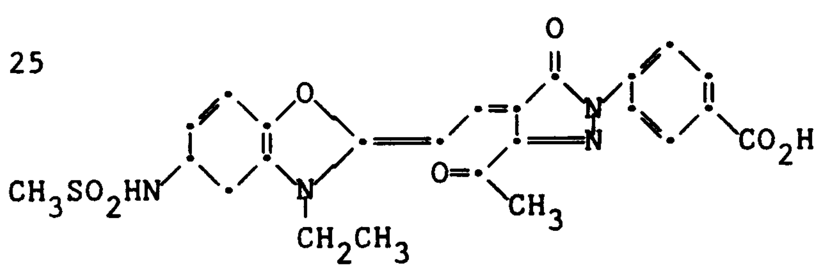

26

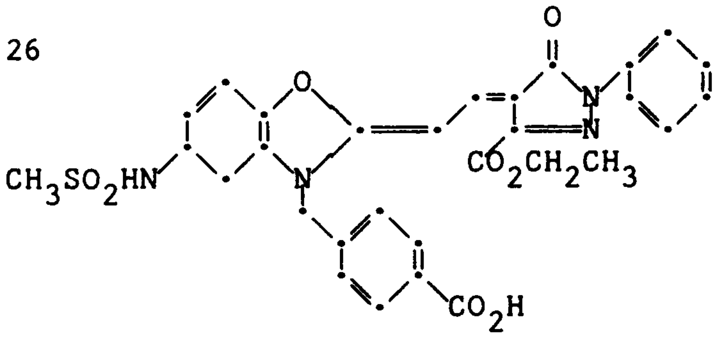

27

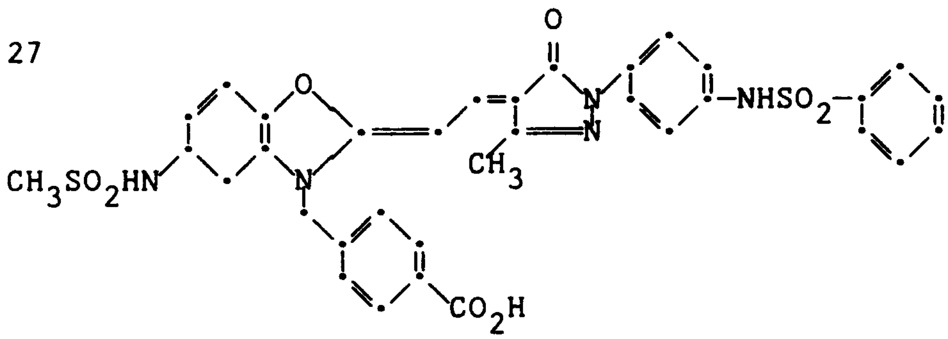

28

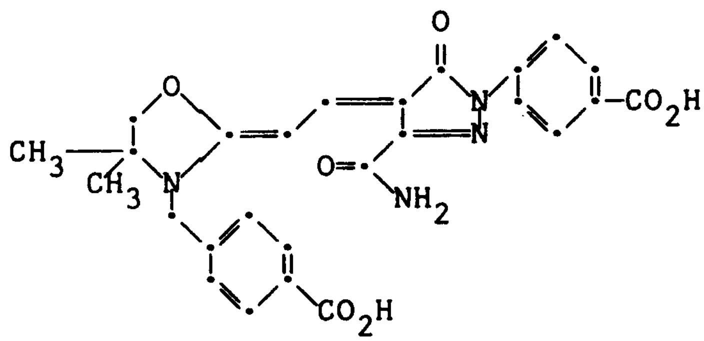

29

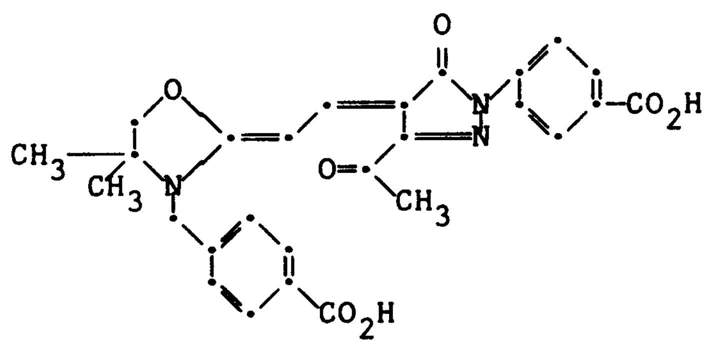

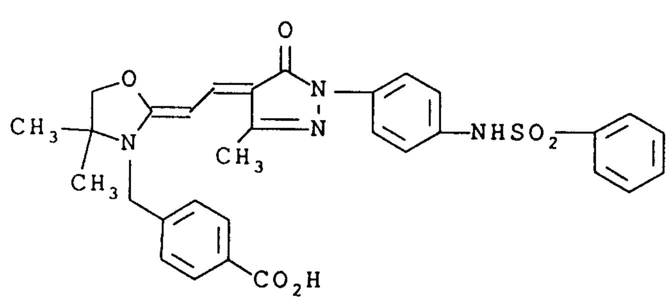

The dyes of formula (I) can be prepared by synthetic techniques well-known in the art, as illustrated by the synthetic examples below. Such techniques are further illustrated, for example, in "The Cyanine Dyes and Related Compounds", Frances Hamer, Interscience Publishers, 1964.

The dyes may be located in any layer of the element where it is desirable to absorb light, but it is particularly advantageous to locate them in a layer where they will be solubilized and washed out during processing. Useful amounts of dye range from 0.01 to 10.76 g/$m^2$ (1 to 1000 mg/$ft^2$). The dye should be present in an amount sufficient to yield an optical density at the transmission D-max in the visible region before processing of at least 0.10 density units and preferably at least 0.50 density units. This optical density will generally be less than 5.0 density units for most photographic applications.

The solid particle dispersion can be formed by precipitating or reprecipitating (e.g., by solvent or pH shift) the dye in the form of a dispersion under controlled conditions so that the particle size requirements described below are satisfied and/or by well-known milling techniques, e.g., ball-milling, sand-milling, or colloid-milling the dye in the presence of a dispersing agent. By solid particle dispersion, it is meant that the dye particles in the dispersion are of microscopic size, preferably having a mean diameter of less than 10 $\mu$m and preferably less than 1 $\mu$m. The dye particles can generally be prepared in sizes ranging down to 0.01 $\mu$m. Although particle sizes below 0.01 $\mu$m will not adversely affect performance of the solid particle dispersion, the difficulty, time, and expense required to prepare such small particles can sometimes be prohibitive.

The dye of formula (I) is incorporated in a photographic element in the form of a solid particle dispersion of particles dispersed in a hydrophilic colloid medium, such as gelatin. However, the dye can also be incorporated in hydrophilic layers of photographic elements using other techniques, such as dispersed in a high-boiling water-insoluble solvent such as dibutyl phthalate or tricresyl phosphate or loaded in a polymeric latex as described in Research Disclosure, Item 19551, July, 1980.

The support of the photographic element can be any of a number of well-known supports for photographic elements. These include polymeric films such as cellulose esters (e.g., cellulose triacetate and diacetate) and polyesters of dibasic aromatic carboxylic acids with divalent alcohols (e.g., poly(ethylene terephthalate)), paper, and polymer-coated paper. Such supports are described in further detail in Research Disclosure, December, 1978, Item 17643 [hereinafter referred to as Research Disclosure], Section XVII.

The radiation-sensitive layer of the photographic element can contain any of the known radiation-sensitive materials, such as silver halide, diazo image-forming systems, light-sensitive tellurium-containing compounds, light-sensitive cobalt-containing compounds, and others described in, for example, J. Kosar, Light-Sensitive Systems: Chemistry and Application of Nonsilver Halide Photographic Processes, J. Wiley & Sons, N.Y. (1965). Radiation-sensitive materials exhibiting sensitivity to blue light and especially those sensitive to blue light and at least some other wavelength of radiation are preferred, as the dyes of formula (I) can be advantageously used to absorb some or all of the blue light.

Silver halide is especially preferred as a radiation-sensitive material. Silver halide emulsions can contain, for example, silver bromide, silver chloride, silver iodide, silver chlorobromide, silver chloroiodide, silver bromoiodide, or mixtures thereof. The emulsions can include coarse, medium, or fine silver halide grains bounded by 100, 111, or 110 crystal planes. Silver halide emulsions and their preparation are further described in Research Disclosure, Section I. Also useful are tabular grain silver halide emulsions, as described in Research Disclosure, January, 1983, Item 22534 and U.S. Patent 4,425,426.

The radiation-sensitive materials described above can be sensitized to a particular wavelength range of radiation, such as the red, blue, or green portions of the visible spectrum, or to other wavelength ranges, such as ultraviolet, infrared, X-ray, and the like. Sensitization of silver halide can be accomplished with chemical sensitizers such as gold compounds, iridium compounds, or other group VIII metal compounds, or with spectral sensitizing dyes such as cyanine dyes, merocyanine dyes, styryls, or other known spectral sensitizers. Additional information on sensitization of silver halide is described in Research Disclosure, Sections I-IV.

The dyes of formula (I) tend to absorb light in the blue portion of the spectrum, and are thus useful in many applications requiring the use of a blue-absorbing filter dyes. For example, they can be used as interlayer dyes, trimmer dyes, or antihalation dyes. They can be used to prevent crossover in X-ray materials, to prevent unwanted blue light from reaching the green-sensitive emulsion layer of a multicolor photographic element, and other uses as indicated by the absorbance spectrum of the particular dye. The dyes can be used in a separate filter layer or as an intergrain absorber.

Multicolor photographic elements generally comprise a blue-sensitive silver halide layer having a yellow color-forming coupler associated therewith, a green-sensitive layer having a magenta color-forming coupler associated therewith, and a red-sensitive silver halide layer having a cyan color-forming coupler associated therewith. Color photographic elements and color-forming couplers are well-known in the art and are further

described in Research Disclosure, Section VII.

The photographic element can also include any of a number of other well-known additives and layers, as described in Research Disclosure. These include, for example, optical brighteners, antifoggants, image stabilizers, light-absorbing materials such as filter layers or intergrain absorbers, light-scattering materials, gelatin hardeners, coating aids and various surfactants, overcoat layers, interlayers and barrier layers, antistatic layers, plasticizers and lubricants, matting agents, development inhibitor-releasing couplers, bleach accelerator-releasing couplers, and other additives and layers known in the art.

The dye of formula (I) can be located in any layer of a photographic element where it is desired to absorb light. In a preferred embodiment, the dye is preferably located in a layer where it will be subjected to high pH (i.e., 8 to 12) and aqueous sulfite during photographic processing, so as to allow the dye to be solubilized and removed or decolorized .

The photographic element, when exposed, can be processed to yield an image. During processing, the dye of formula (I) will generally be decolorized and/or removed. Following processing, the dye of formula (I) should contribute less than 0.10 density unit, and preferably less than 0.02 density unit to the transmission D-max in the visible region in the minimum density areas of the exposed and processed element.

Processing can be by any type of known photographic processing, as described in Research Disclosure, Sections XIX-XXIV, although it preferably includes a high pH (i.e., 8 or above) step utilizing an aqueous sulfite solution in order to maximize decolorization and removal of the dye. A negative image can be developed by color development with a chromogenic developing agent followed by bleaching and fixing. A positive image can be developed by first developing with a non-chromogenic developer, then uniformly fogging the element, and then developing with a chromogenic developer. If the material does not contain a color-forming coupler compound, dye images can be produced by incorporating a coupler in the developer solutions.

Bleaching and fixing can be performed with any of the materials known to be used for that purpose. Bleach baths generally comprise an aqueous solution of an oxidizing agent such as water soluble salts and complexes of iron (III) (e.g., potassium ferricyanide, ferric chloride, ammonium of potassium salts of ferric ethylenediaminetetraacetic acid), water-soluble persulfates (e.g., potassium, sodium, or ammonium persulfate), water-soluble dichromates (e.g., potassium, sodium, and lithium dichromate), and the like. Fixing baths generally comprise an aqueous solution of compounds that form soluble salts with silver ions, such as sodium thiosulfate, ammonium thiosulfate, potassium thiocyanate, sodium thiocyanate, thiourea, and the like.

The invention is further illustrated by the following Examples:

Synthesis Example 1 - Preparation of Dye 3

4.36 g of 1-(4-carboxyphenyl)-3-methyl-2-pyrazolinone was combined with 8.68 g acetanilidovinylbenzoxazolium iodide, 4.0 g triethylamine, and 100 ml ethanol and refluxed. After 45 minutes, an orange solid had formed. The mixture was cooled to room temperature, chilled in ice for 30 minutes, filtered, washed with ethanol and ligroin P950, and air dried to yield 7.4 g of a dull orange powder. This powder was dissolved in 200 ml methanol and 100 ml water with 20 ml triethylamine. The mixture was filtered to remove particulates and the filtrate was acidified to pH 4 with glacial acetic acid while rapidly stirring. The resulting solid was filtered and successively washed with water, ethanol, ligroin P950, and dried to yield 6.75 g of dye 3. The λ-max in methanol and triethylamine was 450 nm, $\epsilon = 7.4 \times 10^4$. NMR analysis indicated the dye had the structure of dye 3.

Synthesis Example 2 - Preparation of Dye 2

5.2 g of 1-(3,5-dicarboxyphenyl)-3-methyl-2-pyrazolinone was combined with 9.5 g acetanilidovinylbenzoxazolium iodide, 6.0 g triethylamine, and 100 ml ethanol and refluxed. After 30 minutes, a dark orange precipitate had formed. The mixture was cooled to room temperature, diluted with 150 ml water, and 5 ml glacial acetic acid was added with rapid stirring. The orange precipitate was filtered, washed with 100 ml water, and dried. This material was slurried in 300 ml refluxing methanol, allowed to cool to room temperature, and stirred for an additional 20 minutes. The solid was filtered, washed with 200 ml methanol, and dried to yield 7.6 g of dye 2. The λ-max in methanol and triethylamine was 452 nm, $\epsilon = 7.19 \times 10^4$, melting point = 310 °C. NMR analysis indicated the dye had the structure of dye 2.

Synthesis Example 3 - Preparation of Dye 4

To a slurry of 3-acetyl-1-(4-carboxyphenyl)-2-pyrazolinone (0.75 g), 3-ethyl-2-(4-methoxy-1,3-butadienylidenyl)benzoxazolium iodide (1.08 g), and 25 ml methanol was added 1.0 ml triethylamine. The mixture was allowed to stand at room temperature for 30 minutes. The deep magenta solid was filtered and washed ethanol and ligroin, and dried to yield 0.85 g of crude dye 4. The dye was recrystallized by slurrying in 30 ml of a 2:1 mixture of ethanol and methanol, heating, chilling with ice, filtering the solid, and washing with ethanol to yield 0.80 g of dye 4. The λ-max in methanol and triethylamine was 562 nm, $\epsilon$ = $11.9 \times 10^4$. NMR analysis indicated the dye had the structure of dye 4.

Examples 1-7 - Preparation of Solid Particle Dispersions

Dyes 1-7 were prepared as solid particle dispersions by ball-milling according to the following procedure. Water (21.7 ml) and a 6.7% solution of Triton X-200® surfactant (2.65 g) were placed in a 60 ml screw-capped bottle. A 1.00 g sample of dye was added to this solution. Zirconium oxide beads (40 ml, 2 mm diameter) were added and the container with the cap tightly secured was placed in a mill and the contents milled for four days. The container was removed and the contents added to a 12.5% aqueous gelatin (8.0 g) solution. The new mixture was placed on a roller mill for 10 minutes to reduce foaming and the resulting mixture was filtered to remove the zirconium oxide beads.

Examples 8-14 - Dye Wandering and Solubilization

A number of dyes useful in the practice of the invention were coated as solid particle dispersions (particle sizes of 0.01 to 1.0 μm) in gelatin on polyester supports according to the following procedure. A spreading agent (surfactant 10G®) and a hardener (bis(vinylsulfonylmethyl) ether) were added to the dye-gelatin melt prepared as described above. A melt from this mixture was then coated on a poly(ethylene terephthalate) support to achieve a dye coverage of 0.32 g/m$^2$, a gelatin coverage of 1.60 g/m$^2$, a spreading agent level of 0.096 g/m$^2$, and a hardener level of 0.016 g/m$^2$.

A comparison dye of the formula:

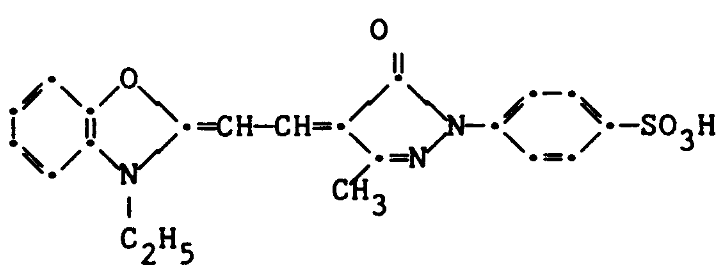

was also coated in gelatin on an identical support at identical gelatin and dye levels. The absorbance of the dye dispersions was measured with a spectrophotometer. Identical elements were subjected to a 5 minute distilled water wash, to Kodak E-6® Processing (which is described in British Journal of Photography Annual, 1977, pp. 194-97), and to Kodak Prostar® processing (which is used commercially to process microfilm, subjecting the elements to a development step at a pH of about 11.4 for about 30 seconds), and the absorbance was measured for each. The results are presented in Table I.

Table I

| Dye | λ-max (nm) | Bandwidth (nm) | D-max | D-max after water Wash | D-max After E-6® Processing | D-max After Prostar® Processing |
|---|---|---|---|---|---|---|
| 1 | 410 | 98 | 1.18 | 1.05 | 0.01 | 0.01 |
| 2 | 439 | 113 | 1.52 | 1.45 | — | 0.03 |
| 3 | 505 | 180 | 0.98 | 0.97 | — | 0.02 |
| 4 | 635 | 292 | 0.47 | 0.47 | — | 0.01 |
| 5 | 473 | 40 | 1.20 | 1.12 | 0.01 | 0.01 |
| 6 | 456 | 120 | 1.78 | 1.77 | 0.01 | 0.01 |
| 7 | 455 | 84 | 1.83 | 1.86 | 0.01 | 0.28 |
| comparison | 425 | 81 | 2.28 | 0.01 | — | — |

The results presented in Table I show that the dyes 1-7 according to formula (I) are not affected by the water wash, indicating no wandering at coating pH, but are fully solubilized for removal and/or decolorization by the photographic processing to which they were subjected. The comparison dye, on the other hand, was washed out during the water wash, indicating severe dye wandering.

## Claims

**1.** A solid particle dispersion of a dye having the formula: wherein

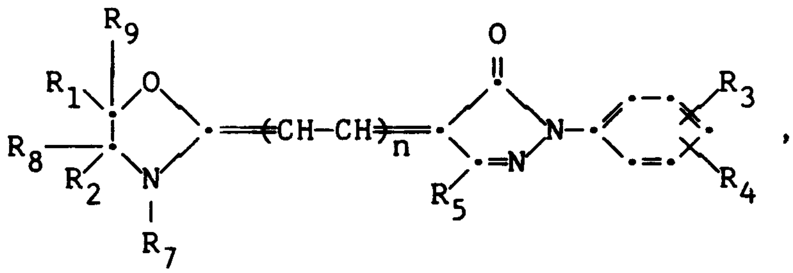

$R_1$ and $R_2$ are each independently substituted or unsubstituted alkyl or aryl, or together represent the atoms necessary to complete a substituted or unsubstituted 5- or 6-membered ring,

$R_3$ and $R_4$ each independently represents H, substituted or unsubstituted alkyl, substituted or unsubstituted aryl, $CO_2H$, or $NHSO_2R_6$,

$R_5$ is H, substituted or unsubstituted alkyl, substituted or unsubstituted aryl, substituted or unsubstituted carboxylate, substituted or unsubstituted amido, or substituted or unsubstituted acyl,

$R_6$ and $R_7$ are each independently substituted or unsubstituted alkyl or substituted or unsubstituted aryl,

$R_8$ is substituted or unsubstituted alkyl, or together with $R_9$ forms a double bond,

$R_9$ is H or together with $R_8$ forms a double bond, and

n is 1 or 2,

with the proviso that at least one of the aryl rings of the dye molecule has at least one substituent that is $CO_2H$ or $NHSO_2R_6$.

**2.** A dispersion according to Claim 1 wherein $R_1$ and $R_2$ are each independently substituted or unsubstituted alkyl of from 1 to 6 carbon atoms, or together form a substituted or unsubstituted phenyl ring, $R_3$ is $CO_2H$ or $NHSO_2R_6$, $R_4$ is H, $CO_2H$, or $NHSO_2R_6$, $R_5$ is substituted or unsubstituted alkyl of from 1 to 4 carbon atoms, $R_6$ is substituted or unsubstituted aryl of from 6 to 12 carbon atoms, $R_7$ is substituted or unsubstituted alkyl from 1 to 8 carbon atoms.

**3.** A dispersion according to Claims 1-2 wherein $R_1$ and $R_2$ are each methyl or together with the carbon atoms to which they are attached, form a phenyl ring, $R_3$ is $CO_2H$, $R_4$ is H or $CO_2H$, $R_5$ is methyl, and $R_7$ is ethyl.

**4.** A dispersion according to Claims 1-3 wherein $R_8$ and $R_9$ form part of a double bond between the ring carbon atoms to which $R_1$ and $R_2$ are attached.

**5.** A dispersion according to Claims 1-4 wherein the dye is in the form of particles having a mean diameter of from 0.01 to 1.0 $\mu$m.

**6.** A dispersion according to Claims 1-5 wherein the dye is in the form of particles dispersed in a hydrophilic colloid medium.

**7.** A photographic element comprising a support having thereon a radiation-sensitive layer and a dye, located in the radiation-sensitive layer or in another layer of the element, characterized in that the dye is a solid particle dispersion according to any of Claims 1-6.

**Patentansprüche**

1. Festpartikeldispersion eines Farbstoffes mit der Formel:

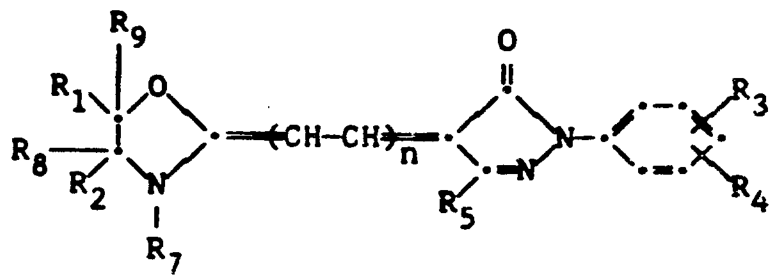

worin bedeuten:
$R_1$ und $R_2$ jeweils unabhängig voneinander substituiertes oder unsubstituiertes Alkyl oder Aryl, oder gemeinsam die Atome, die zur Vervollständigung eines substituierten oder unsubstituierten 5- oder 6-gliedrigen Ringes erforderlich sind,
$R_3$ und $R_4$ jeweils unabhängig voneinander H, substituiertes oder unsubstituiertes Alkyl, substituiertes oder unsubstituiertes Aryl, $-CO_2H$ oder $-NHSO_2R_6$,
$R_5$ gleich H, substituiertes oder unsubstituiertes Alkyl, substituiertes oder unsubstituiertes Aryl, substituiertes oder unsubstituiertes Carboxylat, substituiertes oder unsubstituiertes Amido, oder substituiertes oder unsubstituiertes Acyl,
$R_6$ und $R_7$ jeweils unabhängig voneinander substituiertes oder unsubstituiertes Alkyl oder substituiertes oder unsubstituiertes Aryl,
$R_8$ substituiertes oder unsubstituiertes Alkyl, oder gemeinsam mit $R_9$ eine Doppelbindung,
$R_9$ gleich H oder gemeinsam mit $R_8$ eine Doppelbindung und
n gleich 1 oder 2,
wobei gilt, daß mindestens einer der Arylringe des Farbstoffmoleküls mindestens einen Substituenten aufweist, der besteht aus $-CO_2H$ oder $-NHSO_2R_6$.

2. Dispersion nach Anspruch 1, worin $R_1$ und $R_2$ jeweils unabhängig voneinander stehen für substituiertes oder unsubstituiertes Alkyl mit 1 bis 6 Kohlenstoffatomen, oder sie bilden gemeinsam einen substituierten oder unsubstituierten Phenylring, worin $R_3$ steht für $-CO_2H$ oder $-NHSO_2R_6$, worin $R_4$ steht für H, $-CO_2H$ oder $-NHSO_2R_6$, worin $R_5$ steht für ein substituiertes oder unsubstituiertes Alkyl mit 1 bis 4 Kohlenstoffatomen, ferner $R_6$ die Bedeutung eines substituierten oder unsubstituierten Aryls mit 6 bis 12 Kohlenstoffatomen hat und $R_7$ steht für substituiertes oder unsubstituiertes Alkyl mit 1 bis 8 Kohlenstoffatomen.

3. Dispersion nach Ansprüchen 1 bis 2, worin $R_1$ und $R_2$ jeweils für Methyl stehen oder gemeinsam mit den Kohlenstoffatomen, an die sie gebunden sind, einen Phenylring bilden, $R_3$ steht für $-CO_2H$, $R_4$ steht für H oder $-CO_2H$, $R_5$ steht für Methyl und $R_7$ steht für Ethyl.

4. Dispersion nach Ansprüchen 1 bis 3, in der $R_8$ und $R_9$ einen Teil einer Doppelbindung zwischen den Ring-Kohlenstoffatomen bilden, an die $R_1$ und $R_2$ gebunden sind.

5. Dispersion nach Ansprüchen 1 bis 4, in der der Farbstoff in Form von Partikeln mit einem mittleren Durchmesser von 0,01 bis 1,0 $\mu$m vorliegt.

6. Dispersion nach Ansprüchen 1 bis 5, in der der Farbstoff in Form von Partikeln vorliegt, die in einem hydrophilen kolloidalen Medium dispergiert sind.

7. Photographisches Element mit einem Träger mit einer darauf befindlichen strahlungsempfindlichen Schicht und einem Farbstoff, der sich in der strahlungsempfindlichen Schicht befindet oder in einer anderen Schicht des Elementes, dadurch gekennzeichnet, daS der Farbstoff in Form einer Festpartikeldispersion nach einem der Ansprüche 1 bis 6 vorliegt.

## Revendications

**1.** Dispersion de particules solides d'un colorant ayant la formule :

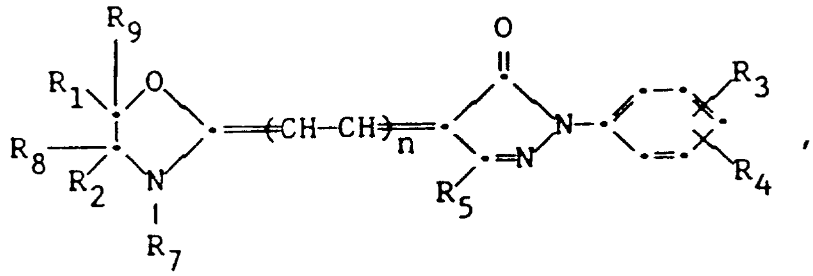

où

$R^1$ et $R^2$ représentent chacun indépendamment alkyle ou aryle, substitués ou non, ou représentent ensemble les atomes nécessaires pour compléter un noyau à 5 ou 6 maillons, substitué ou non,

$R^3$ et $R^4$ représentent chacun indépendamment H, alkyle substitué ou non, aryle substitué ou non, $C0_2H$, ou $NHSO_2R^6$,

$R^5$ est H, alkyle substitué ou non, aryle substitué ou non, carboxylate substitué ou non, amido substitué ou non, acyle substitué ou non,

$R^6$ et $R^7$ représentent chacun indépendamment alkyle substitué ou non, ou aryle substitué ou non,

$R^8$ représente alkyle substitué ou non, ou forme avec $R^5$ une double liaison,

$R^9$ est H ou forme avec $R^8$ une double liaison,

n est 1 ou 2,

avec la condition qu'un au moins des groupes aryle de la molécule de colorant a au moins un substituant $C0_2H$ ou $NHS0_2R_6$.

**2.** Dispersion selon la revendication 1, où $R^1$ et $R^2$ représentent chacun indépendamment un groupe alkyle substitué ou non, de 1 à 6 atomes de carbone, ou forment ensemble un noyau phényle substitué ou non, $R^3$ est $CO_2H$, ou $NHS0_2R^6$, $R^4$ est H, $C0_2H$, ou $NHS0_2R^6$, $R^5$ est un groupe alkyle substitué ou non, de 1 à 4 atomes de carbone, $R^6$ est un groupe aryle substitué ou non de 6 à 12 atomes de carbone, $R^7$ est un groupe alkyle de 1 à 8 atomes de carbone.

**3.** Dispersion selon les revendications 1-2, où $R^1$ et $R^2$ sont chacun méthyle ou, ensemble avec les atomes de carbone auxquels ils sont attachés, forment un noyau phényle, $R^3$ est $C0_2H$, $R^4$ est H ou $C0_2H$, $R^5$ est méthyle et $R^7$ est éthyle.

**4.** Dispersion selon les revendications 1-3, où $R^8$ et $R^9$ forment une double liaison entre les atomes de carbone du cycle auxquels $R^1$ et $R^2$ sont attachés.

**5.** Dispersion selon les revendications 1-4, dans laquelle le colorant est sous forme de particules ayant un diamètre moyen de 0,01 à 1,0 $\mu$m.

**6.** Dispersion selon les revendications 1-5, dans laquelle le colorant est sous forme de particules dispersées dans un colloïde hydrophile.

**7.** Produit photographique comprenant un support avec, sur ce support une couche sensible aux radiations et un colorant, situé dans la couche sensible aux radiations ou dans une autre couche de produit, caractérisé en ce que le colorant est une dispersion de particules solides selon l'une des revendications 1-6.